# EUROPÄISCHE PATENTSCHRIFT

(11) **EP 4 191 215 B1**
(45) Veröffentlichungstag und Bekanntmachung des Hinweises auf die Patenterteilung: **01.10.2025**
(21) Anmeldenummer: 22217309.8
(22) Anmeldetag: 22.12.2017
(51) Int. Cl.: G01J 5/04, G01J 5/12, G01J 5/02, G01J 5/08, G01J 5/06, G01J 5/0806

(54) **SMD-FÄHIGER THERMOPILE INFRAROT SENSOR**
SMD-ENABLED INFRARED THERMOPILE SENSOR
CAPTEUR INFRAROUGE À THERMOPILE CMS

(30) Priorität: 30.12.2016 DE 102016125943
(43) Veröffentlichungstag der Anmeldung: 07.06.2023
(62) Teilanmeldung aus: 17822310.3
(73) Patentinhaber: Heimann Sensor GmbH, 01109 Dresden (DE)
(72) Erfinder: SCHIEFERDECKER, Jörg, 01157 Dresden (DE); HERRMANN, Frank, 01809 Dohna (DE); SCHMIDT, Christian, 01067 Dresden (DE); LENEKE, Wilhelm, 65232 Taunusstein (DE); SIMON, Marion, 65307 Bad Schwalbach (DE); STORCK, Karlheinz, 65391 Lorch am Rhein (DE); SCHULZE, Mischa, 65510 Hünstetten (DE)
(74) Vertreter: Lippert Stachow Patentanwälte Rechtsanwälte Partnerschaft mbB

(56) Entgegenhaltungen:
- KR-B1- 101 661 920
- US-A1- 2011 174 978
- US-A1- 2014 041 214
- US-A1- 2014 117 201
- US-A1- 2016 149 105
- US-A1- 2016 305 829

## Beschreibung

Die Erfindung betrifft einen SMD-fähigen Thermopile Infrarot Sensor zur berührungslosen Temperaturmessung, als Hot-Spot oder zur Gestendetektion, mit mindestens einem miniaturisierten Thermopilepixel auf einem monolithisch integrierten Sensorchip, der in einem hermetisch verschlossenen Gehäuse, bestehend aus zumindest teilweise nichtmetallischen Gehäusesubstrat und einem Gehäusedeckel, untergebracht ist, wobei sich im Gehäuse ein Gas- oder Gasgemisch befindet.

Insbesondere für mobile Geräte, wie Smartphones, -pads oder andere kleine tragbare Geräte, wird die berührungslose Temperaturmessung, Gestensteuerung oder die Detektion von heißen und kalten Objekten zunehmend interessant. Dabei kommt es wegen des geringen zur Verfügung stehenden Platzes oder wegen der zunehmend geringer werdenden Gerätedicke auf besonders kleine Abmessungen von zu montierenden SMD-Bauelementen an. Weil auch entferntere oder räumlich begrenzte Messobjekte erfasst werden sollen, wird ein kleiner Blickwinkel für den oder die Sensoren gefordert.

Ebenso muss der Infrarotsensor bereits vor der Montage in einem der genannten Geräte "kalibriert" sein, d.h. die Ausgabe einer reproduzierbaren Objekttemperatur ermöglichen. Ein bevorzugtes Anwendungsgebiet besteht beispielsweise darin, das Smartphone zur berührungslosen Fiebermessung einzusetzen, was wiederum eine sehr hohe Messgenauigkeit erfordert.

Typische Anforderungen an die Abmessungen der Gehäuse für Smartphones sind insbesondere, dass die Z-Achse (also in Messrichtung) höchstens 3 mm und bevorzugt nur 2 mm beträgt, damit der Infrarot Sensor z.B. neben einer CMOS-Kamera auf der Leiterplatte oder auf engstem Raum an der Stirnfläche des Smartphones angeordnet werden kann. Darüber hinaus sollten auch die lateralen Dimensionen in x- und y-Richtung des Infrarotsensors geringer als 5 mm sein, bevorzugt mindestens in einer Achse auch geringer als 3...4 mm.

Bekannt sind eine große Zahl von thermischen Infrarot Sensoren, die in Si-Mikromechanik Technologie hergestellt werden. Beispielsweise pyroelektrische Sensoren, Bolometer und Thermopiles. Zum Erreichen einer hohen Absolutgenauigkeit bei der Temperaturmessung benötigen pyroelektrische Sensoren einen Modulator (Chopper). Auch Bolometer erfordern zum Erreichen einer hohen Genauigkeit zumindest zeitweise den Offsetabgleich durch einen mechanischen Shutter.

Sowohl Chopper als auch Shutter benötigen als mechanisch bewegte Teile des Sensors eine ausreichende Zuverlässigkeit über die Lebensdauer des Gerätes und müssen im optischen Kanal des IR Sensors (also in Blickrichtung vor dem Sensor) eingebaut sein. Also würde sich die Abmessung in "z-Richtung" um ca. 1 mm vergrößern, da der Chopper oder Shutter ja in den optischen Kanal eingebaut werden muss. Da neben der zusätzlichen Chopper/Shutter-Baugruppe auch eine fokussierende Optik, der Sensorchip und das Gehäuse, Platz benötigen, ist es beim gegenwärtigen Stand der Technik nicht möglich, mit pyroelektrischen Sensoren oder Bolometer-Sensoren einen solch kleinen IR Sensor mit < 3 mm oder gar < 2 mm z-Achse (sogenannter optischer Track) aufzubauen.

Ohne Chopper / Shutter ist die erforderliche Messgenauigkeit insbesondere für Fiebermessungen mit Bolometern oder pyroelektrischen Sensoren nicht erreichbar. Aber auch ohne eingebauten Shutter hat der kleinste derzeit bekannte Infrarot Arraysensor auf Bolometer-Basis mit eingebauter Optik und Signalverarbeitung zur Temperaturmessung, der "Lepton" von FLIR Systems, eine Gehäusehöhe von 5,9 mm. (siehe Datenblatt "FLIR Lepton", FLIR Systems, Goleta, CA, USA). Das ist weit von den zulässigen Gehäusegrößen für moderne Smartphones entfernt. Damit sind beim gegenwärtigen Stand der Technik pyroelektrische Sensoren und Bolometer für die Anwendung in modernen, schlanken Smartphones ausgeschlossen.

Thermopile Infrarot Sensoren werden in großen Stückzahlen auch für Consumer Messgeräte mit hoher Genauigkeit (z.B. Fieberthermometer) eingesetzt. Dabei kommt üblicherweise ein Transistorgehäuse (TO-Gehäuse) zum Einsatz. Die kleinsten TO-Sensoren für solche Messzwecke haben eine Gehäusehöhe von etwa 3 mm, allerdings haben sie keine fokussierende Optik, was zu einem viel zu großen Blickwinkel von über 100 Grad führt und es fehlt auch jegliche Signalverarbeitung (siehe Datenblatt 10TP583T-0154, Datenblatt der Fa. Semitek Ishizuka Electronics, Japan).

Von der Fa. Heimann Sensor ist ein Thermopile Sensor mit fokussierender Optik bekannt, der ebenfalls in einem TO-Gehäuse untergebracht ist. Der Typ HMS M21 L3.0 F5.5 (siehe Datenblatt Fa. Heimann Sensor GmbH, Dresden 2012) erlaubt eine Begrenzung des Blickwinkels auf < 30 Grad, aber die Gehäusehöhe von 5,2 mm ist viel zu hoch für den Einsatz in Mobilgeräten, außerdem fehlt eine Signalverarbeitung für Temperaturmessungen.

Allen genannten Thermopile Lösungen im TO-Gehäuse ist auch gemeinsam, dass die Anschlüsse mittels Drahtstiften an der Unterseite der Gehäuse die Montage auf einer Leiterplatte unmöglich machen. Eine Oberflächenmontierbarkeit auf Leiterplatten (SMD Fähigkeit) ist allerdings erforderlich.

Weitere Lösungen für miniaturisierte Thermopile Sensoren gehen aus folgenden Druckschriften hervor:
Zum Beispiel wird in der EP 1 296 122 B1 ein Thermopile Sensorchip dargestellt, das mit senkrechten Wänden eine möglichst große Membran aufweist, um das Messsignal zu maximieren. Hinweise zur Miniaturisierung der Gehäuseform, der SMD-Fähigkeit und zur Einschränkung des Öffnungswinkels fehlen.

Ein weiterer Sensor zum berührungslosen Messen einer Temperatur geht aus der US 8 592 765 B2 hervor, indem ein Thermopile Sensorpixel mit einer dünnen Membran beschrieben wird, wobei auch eine nicht näher beschriebene integrierte Signalverarbeitung erwähnt wird. Allerdings gibt es keinerlei Hinweise auf eine SMD-Fähigkeit oder gar in Bezug auf sehr geringe Abmessungen in Richtung der optischen Achse (z-Achse), denn bei den dargestellten Gehäusetypen handelt es sich durchweg um große bedrahtete TO-Gehäuseformen.

In der DE 103 21 640 B2 wird ein SMD-fähiges Thermopile vorgestellt, das aber keine kleine Bauform zulässt und auch keine monolithische Integration der Signalverarbeitung vorschlägt. Ebenso fehlt eine fokussierende Linsenoptik, die einen kleinen Blickwinkel für Pixel bei kleiner Bauhöhe erlaubt, aber selbst ohne fokussierende Linsenoptik ergibt sich hier eine Bauhöhe von über 3 mm.

Weiterhin werden in der EP 2 887 033 A1 und der EP 2 916 118 A1 Thermopile Pixel in einem Wafer Level Package vorgeschlagen, die mit einer Apertur vor dem Thermopile Pixel versehen sind. Jedoch fehlt eine fokussierende Linse ebenso wie eine SMD-fähige Lösung, mit der die geforderten geringen Abmessungen in der z-Achse erreicht werden.

Die EP 2 940 442 A1 bezieht sich auf ein Wafer Level Package für ein Thermopile Pixel, das im Flip-Chip-Verfahren aufgebaut ist und wobei sich vor dem Sensorpixel eine Loch- oder Aperturblende befindet. Hinweise auf eine SMD-Fähigkeit und zu einer fokussierenden Optik fehlen allerdings. Derartige Lochblenden haben aber im Gegensatz zu fokussierenden Linsenoptiken den Nachteil, dass das Signal mit dem Quadrat der Blendenzahl D/f abnimmt, wobei D der Durchmesser der Loch- oder Aperturblende und f die Brennweite bzw. der Abstandzwischen Loch- oder Aperturblende zur sensitiven Absorberfläche ist.

Dieser Effekt lässt sich gut am Beispiel eines Blickwinkels von 15 Grad abschätzen, wobei eine fokussierende Linse sogar Blendenzahlen D/f größer eins erreichen kann und D/F = 1 eine typische Blendenzahl für einlinsige IR Optiken ist (F/1- Optik). Das zum Sensorpixel gelangende Signal sei identisch zum Quadrat der Blendenzahl. Eine Lochblendenoptik mit einem Blickwinkel von 15 Grad würde im Vergleich zu einer fokussierenden Linsenoptik das Signal um etwa das Vierzehnfache reduzieren, was das Auflösungsvermögen und die Messgenauigkeit eines solchen Sensors mit Lochblendenoptik deutlich verschlechtert.

In der EP 2 975 371 A1 wird ein Infrarot Sensor mit Temperaturkompensation in einer Wafer Level Package Lösung vorgestellt, bei der ein oder zwei Sensor Pixel in einem Wafergehäuse untergebracht sind und bei den Pixeln eine unterschiedliche Zahl von Thermoelementen über Schalter zu- oder abgeschaltet werden können, um das Thermopile zu kalibrieren.

Weiterhin wird in der EP 3 026 406 A1 ebenfalls ein in ein Wafer Level Package gehäustes Sensor Pixel mit daneben liegenden Kompensationspixel und einer Kavität jeweils ober- und unterhalb der Pixel angegeben. In der Kavität über dem Kompensationspixel ist offenbar ein interner Layer aufgebracht, der entweder reflektierend oder absorbierend wirkt und Strahlung von außen nicht zulässt, die jedoch zum daneben befindlichen Pixel gelangt.

Auch hier wird keine Möglichkeit zur Oberflächenmontierbarkeit angegeben, ebenso keine fokussierende Linse für einen kleinen Blickwinkel des Pixels, noch eine Signalverarbeitungseinheit.

In der EP 3 035 015 A1 wird ebenfalls ein Wafer Level Package Gehäuse mit zwei Pixeln vorgestellt, bei dem ein Pixel durch eine am darüber liegenden Waferrand liegende Infrarot blockierende Schicht von externer Strahlung abgeschirmt wird, wobei zusätzlich an beiden Pixeln Heizwicklungen angeschlossen sind, um die Pixel bei Bedarf auf eine andere Temperatur zu bringen.

Allen diesen Lösungen ist gemeinsam, dass ein oder mehrere Messpixel vorgesehen sind, wobei jedoch keine fokussierende Optik vorgesehen ist, um dem Sensor trotz geringer Bauhöhe einen kleinen Blickwinkel zur Temperaturmessung entfernter Objekte zu ermöglichen oder die erzielbaren Signale wären derart abgeschwächt, dass die Messaufgabe nicht erfüllt werden kann.

Weiterhin geht aus der US 2014/117201 A1 ein optisches Sensorelement mit integrierter Datenverarbeitung hervor, welches allerdings nicht für SMD-Anwendungen geeignet ist.

Das Sensorelement umfasst ein optisches Sensorelement, diverse periphere Schaltkreise sowie einen Außenanschluss. Der Innenraum ist entweder mit einem Inertgas gefüllt oder evakuiert, um eine Lichtübertragung vom Strahlungstransmissionsfenster zum Sensorelement zu erleichtern. Weiterhin ist das Sensorelement auf einer PCB aufgebaut, umfassend einen ASIC und ein Thermopilearray als separate Bauteile sowie Kondensatoren im Innenraum des Sensorelementes und einen Mikrokontroller sowie einen Kondensator auf der Rückseite der PCB auf der Außenseite, die durch eine Vergussmasse umhüllt werden. Das Gehäuse verjüngt sich stufenweise nach oben und ist mit einem Flansch zur Aufnahme einer Linse versehen.

In der US 2014/0041214 A1 wird ein SMD fähiges Sensorpackage 100 beschrieben, das aus einer Umhüllung und einem Basisteil als Substrat mit Durchkontaktierungen zur Rückseite besteht. Das Substrat kann ein PCB, oder eine Glasfaserplatte sein. Mittig auf dem Substrat befindet sich ein Sensor und daneben ein elektronisches Bauteil, z.B. ein ASIC. Zentrisch über dem Sensor befindet sich eine Linse. Im Inneren des Sensorpackage herrscht Vakuum oder nahezu Vakuum. Das Sensorpackage 100 besitzt einen konstruktionsbedingt hohen Aufbau, der der auch durch die Drahtbrücken bedingt ist, so dass die Anwendungsmöglichkeiten stark begrenzt sind.

Weiterhin wird in der KR 101 661 920 B1 ein Sensorpackage mit einem Basissubstrat in Form einer flachen Leiterplatte (PCB) und einem Sensorchip und daneben einem ASIC auf der Leiterplatte beschrieben. Verschlossen ist diese Anordnung mit einem Gehäuse, das durch ein Silberlot mit der Leiterplatte dicht verbunden ist. Dazu ist die Leiterplatte am Rand mit einem Metall maskiert. Über dem Sensorchip befindet sich eine Linse, die zugleich eine Öffnung im Gehäuse verschließt. Dieses Sensorpackage zeigt ebenfalls einen nachteiligen hohen Aufbau, welcher eine Verwendung in flachen mobilen Geräten ausschließt.

Die US 2016/0305829 A1 bezieht sich auf eine Sensoranordnung, bestehend aus einem rahmenartigen Gehäuse aus einem keramischen Material, Silizium, Metall, einer Metalllegierung oder einem auf Polymer basierten Material und einem Substrat, welches das rahmenartige Gehäuse nach unten abschließt und auf dem sich zwei Thermopile und dazwischen ein thermischer Referenzsensor als Einzelbausteine befinden. Das rahmenartige Gehäuse wird durch einen Deckel verschlossen, der auf wenigstens einer Seite mit einer Metallschicht als Lichtabsorber versehen ist, wobei sich in der Metallschicht über einem der Thermopile eine Öffnung befindet. Mit einer solchen Sensoranordnung ist eine besonders niedrige Bauhöhe nicht zu erreichen und es ist auch keine fokussierende Optik vorhanden.

US 2011/174978 A1 betrifft einen thermischen Infrarotsensor in einem Gehäuse mit Optik sowie einem Chip mit Thermoelementen auf einer Membran, die über einem gut Wärme leitenden rahmenförmigen Tragkörper aufgespannt ist, wobei der Tragkörper senkrechte oder annähernd senkrechte Wände aufweist. Der Thermopile-Infrarot-Sensor ist in monolithischer Silizium-Mikromechanik ausgeführt, der bei kleiner Chipgröße ein hohes thermisches Auflösungsvermögen, einen hohen Füllgrad und eine hohe Ansprechgeschwindigkeit aufweist. Bei diesem Infrarotsensor wird ein standardisiertes TO-Gehäuse mit nach unten herausgeführten Kotaktstiften zur Montage auf Leiterplatten verwendet. Eine solche Gehäuseform ist für besonders flach bauende Anwendungen, insbesondere SMD-Anwendungen, nicht geeignet.

In der US 2016/149105 A1 wird ein Chip zur Strahlungsmessung beschrieben, der einen ersten und einen zweiten Sensor umfasst. Der Chip ist weiterhin mit einer ersten und einer zweiten Vertiefung mit schrägen Wänden versehen. Über dem ersten und dem zweiten Sensor befindet sich ein mit Vertiefungen über den Sensoren versehenes und für Strahlung durchlässiges Substrat zum hermetischen Verschluss. Weiterhin ist eine interne Schicht an der Innenseite der zweiten Vertiefung vorgesehen, welche die Strahlung daran hindert, den zweiten Sensor zu erreichen.

Bei keiner der beschriebenen Lösungen zum Stand der Technik, außer bei der DE 103 21 640 B2, werden Möglichkeiten zur Oberflächenmontierbarkeit (SMD) angegeben und es fehlen Hinweise auf eine Signalverarbeitungseinheit, die beispielsweise Temperaturwerte berechnet.

Die der Erfindung zugrundeliegende Aufgabe besteht darin, einen miniaturisierten oberflächenmontierbaren Thermopile Infrarot Sensor zur berührungslosen Temperaturmessung, als Hot-Spot oder zur Gestendetektion, sowie mit einer integrierten Signalverarbeitung anzugeben, der insbesondere in z-Richtung eine derart geringe Bauhöhe aufweist, um problemlos in mobile Geräte, wie Smartphones eingebaut werden zu können.

Die der Erfindung zugrunde liegende Aufgabe wird durch einen SMD-fähigen Thermopile Infrarot Sensor zur berührungslosen Temperaturmessung mit den Merkmalen von Anspruch 1 gelöst. Vorteilhafte Modifikationen werden in den abhängigen Ansprüchen definiert.

Der erfindungsgemäße Thermopile Infrarotsensor ist durch eine besonders kleine Aufbauform insbesondere in der optischen Achse gekennzeichnet und stellt eine SMD-fähige Konstruktion dar, wobei mindestens ein Sensorpixel eine Absorberfläche von < 0,5 mm, bevorzugt < 0,3 mm aufweist. Weiterhin ist das Gehäusesubstrat mit einer integrierten fokussierenden Linse versehen, um nur Infrarotstrahlung aus einem kleinen Blickwinkel bzw. auch von entfernten Objekten auf dem Sensorpixel zu fokussieren.

Auf jedem Einzelchip sind eine monolithische Signalverarbeitung sowie ein monolithisch auf dem Chip untergebrachtes Speichermedium (z.B. EEPROM) vorgesehen, um Korrekturwerte für gemessene Empfindlichkeiten, Offsetwerte o. dgl. zu speichern und um diese für eine spätere genaue Messung der Objekttemperatur und entsprechende Fehler- und Umgebungstemperaturdriftkorrekturen innerhalb oder außerhalb des Chips zur Verfügung zu stellen.

Die wesentlichen Merkmale der Erfindung bestehen in einem oberflächenmontierbaren SMD-fähigen Infrarotsensor auf einem monolithisch integrierten Sensorchip, der in einem Gehäuse, bestehend aus zumindest teilweise nichtmetallischen Gehäuseboden und einem Gehäusedeckel, beispielsweise in Form eines metallischen Tiefziehteils, untergebracht ist und mit einem Gas- oder Gasgemisch versehen, hermetisch verschlossen ist.

Das monolithische Sensorchip befindet sich auf dem Gehäusesubstrat (Bodenplatte) und wird durch den Gehäusedeckel hermetisch abgeschlossen, wobei sich im Gehäusedeckel eine Öffnung befindet, die mit einer abbildenden Linse verschlossen ist, welche die Strahlung von Objekten auf dem oder den Sensorpixeln abbildet.

Das im hermetisch verschlossenen Gehäuse befindliche Gas- oder Gasgemisch soll eine Wärmeleitfähigkeit aufweisen, die deutlich geringer als die von Luft oder Stickstoff bei Normaldruck ist.

Weiterhin ist die Größe der Sensorelemente, die durch die Linse sehen, kleiner als 500 µm, bevorzugt jedoch kleiner als 300 µm.

Die Abmessungen des Gehäuses, bestehend aus Gehäusesubstrat und Gehäusedeckel sollte in der Länge und Breite höchstens 5 mm, bevorzugt jedoch weniger als 3 mm betragen.

Weiterhin sollte die Dicke des Gehäusesubstrates, d.h. der Bodenplatte, weniger als 0,5 mm, bevorzugt weniger als 0,3 mm betragen.

Schließlich wird die miniaturisierte fokussierende Linse in einem Massenverfahren (z.B. auf Si-Wafern) mit einer Brennweite von höchstens 1,9 mm, bevorzugt jedoch von höchstens 0,5 mm hergestellt.

Eine besondere Version des erfindungsgemäßen Thermopile Infrarot Sensors besteht darin, dass sich am anderen Ende des Sensorchips ein weiteres Sensorpixel für Kompensationszwecke befindet, das nicht durch die Linse, sondern bevorzugt an den darüber befindlichen metallischen Gehäusedeckel sieht.

Um auch eine Gestenerkennung zu ermöglichen oder eine Temperaturverteilung erkennen zu können, sind mehrere Sensorpixel in einer horizontalen Mehrfachanordnung, z.B. matrixartig, auf dem Sensorchip angeordnet.

Die Erfindung wird nachfolgend an Ausführungsbeispielen näher erläutert. In den zugehörigen Zeichnungsfiguren zeigen:
- Fig. 1:: den Grundaufbau eines einelementigen Thermopile Infrarot Sensors als Schnittdarstellung in einem SMD-Gehäuse mit Einzelchip, eingebauter Linsenoptik und monolithisch integrierter Signalverarbeitung;
- Fig. 1a:: einen Ausschnitt A aus Fig. 1 mit Hervorhebung einiger Details;
- Fig. 1b:: eine Modifikation des miniaturisierten SMD-Sensors mit besonders niedriger Bauhöhe;
- Fig. 2:: die Draufsicht auf einen einelementigen Thermopile Infrarot Sensor in einem SMD-Gehäuse;
- Fig. 3:: eine Ausgestaltung des SMD-Sensors mit einem zusätzlichen Referenzpixel für Kompensationswecke;
- Fig. 3a:: eine Ausgestaltung des erfindungsgemässen miniaturisierten SMD-Sensors mit einem Referenzpixel mit unterschiedlicher Deckelhöhe über dem Signal- und dem Referenzpixel;
- Fig. 3b:: eine weitere Ausgestaltung des miniaturisierten SMD-Sensors mit einer von außen auf dem Gehäusedeckel montierten Linse;
- Fig. 4:: die Draufsicht auf den Thermopile Infrarot Sensor im SMD-Gehäuse mit Referenzpixel; und
- Fig. 5:: eine weitere erfindungsgemäße Ausführungsform des SMD Thermopile Infrarot Sensors mit mehreren Sensorpixeln und monolithisch integrierter Signalverarbeitung.

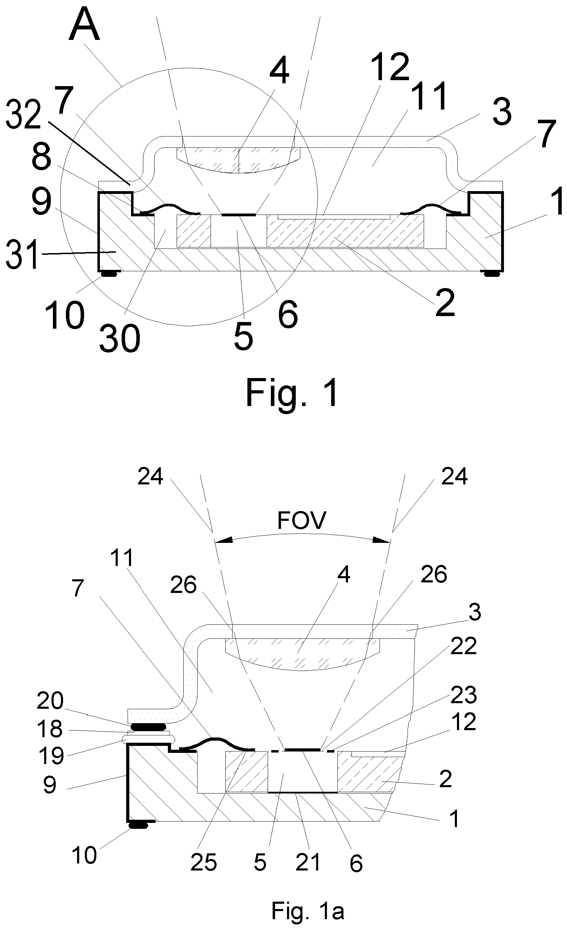

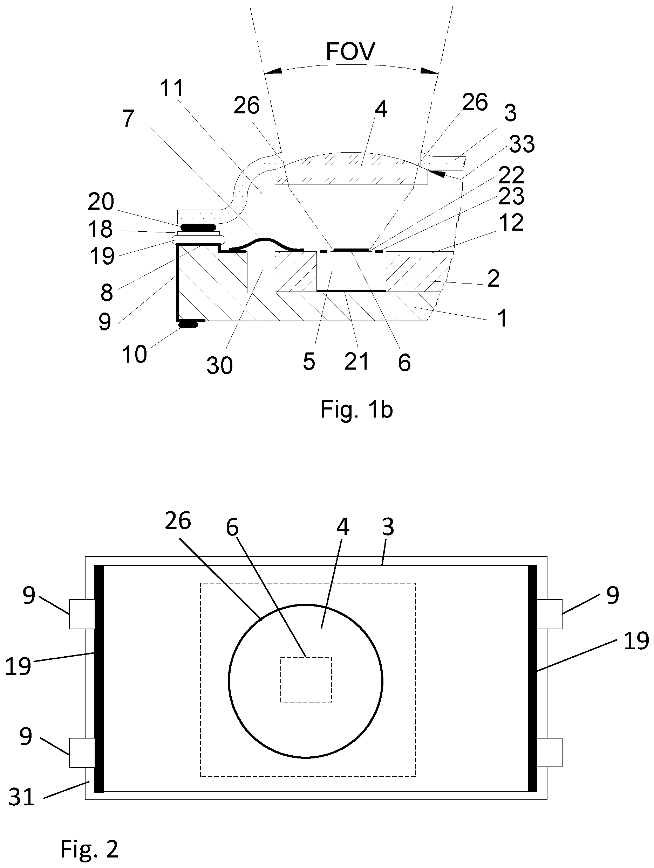

Fig. 1 und 1a zeigen den prinzipiellen Aufbau eines SMD-fähigen miniaturisierten Thermopile Infrarot Sensors, bei dem ein monolithisches Sensorchip 2 in einem Sensorgehäuse angeordnet ist, das aus einer/einem mit einer Aussparung 30 und Seitenwänden 31 versehenen Bodenplatte/Gehäusesubstrat 1 und einem Gehäusedeckel 3 besteht. Das Gehäusesubstrat 1 besteht aus einem Isolator, wie Keramik. Das Sensorchip 2 ist mit einer Membran 6 (Sensorpixel) und einer darauf befindlichen Absorberschicht für Infrarotstrahlung versehen, unter der sich eine Aushöhlung 5 mit senkrechten Wänden befindet, d.h. der Sensorchip umgibt die Aushöhlung wie einen Rahmen, der zugleich als Wärmesenke für das Thermopile dient, wie noch darzulegen ist. Die Membran 6 ist mit Hilfe von Beams 23 über der Aushöhlung 5 aufgehängt, wobei die Beams 23 die Membran 6 mit dem Sensorchip 2 verbinden. Zur thermischen Isolation befinden sich zwischen den Beams 23 und der Membran 6 bzw. dem Sensorchip 2 Schlitze. Die Aushöhlung 5 begrenzt zugleich die Fläche des Pixels 29 (Fig. 1b). Neben der Membran 6 befindet sich auf dem Sensorchip 2 eine Signalverarbeitungseinheit 12.

An den Seiten der Bodenplatte 1 befinden sich seitlich des Sensorchips 2 jeweils metallische Verbindungen 9 von der Vorderseite zur Rückseite der Bodenplatte 1 (Fig. 1). Auf der Innenseite des Bodensubstrates 1 endet die metallische Verbindung 9 in einer Kontaktfläche 8 auf der Innenseite der Seitenwand 31 in Form einer Metallisierung als Verbindungsfläche für einen Bonddraht 7 zur elektrischen Verbindung von einem Kontaktpad 25 auf dem Sensorchip 2 und der Kontaktfläche 8 auf dem Bodensubstrat 1 (Fig. 1a). Auf der Rückseite des Gehäusesubstrates 1, d.h. zeichnungsgemäß unten, enden die metallischen Verbindungen 9 jeweils in einer Kontaktfläche 10 für die Oberflächenmontage z.B. auf einer Leiterplatte oder einem Substrat. In Fig. 1 sind auf der rechten und der linken Seite jeweils eine metallische Verbindung 9 mit einem Bonddraht 7 stellvertretend für weitere benachbarte metallische Verbindungen 9 dargestellt, die sich in die Tiefe der Abbildung erstrecken.

Abgedeckt wird das Gehäusesubstrat 1 mit einem Gehäusedeckel 3, dessen nach außen abgewinkelter Seitenrand 32 sich auf der Seitenwand 31 des Gehäusesubstrates 1 hermetisch dicht abstützt (Fig. 1). Im Inneren, also zwischen dem Gehäusedeckel 3 und dem Gehäusesubstrat 1, befindet sich ein Gas oder Gasmedium 11 mit speziellen, noch zu beschreibenden Eigenschaften.

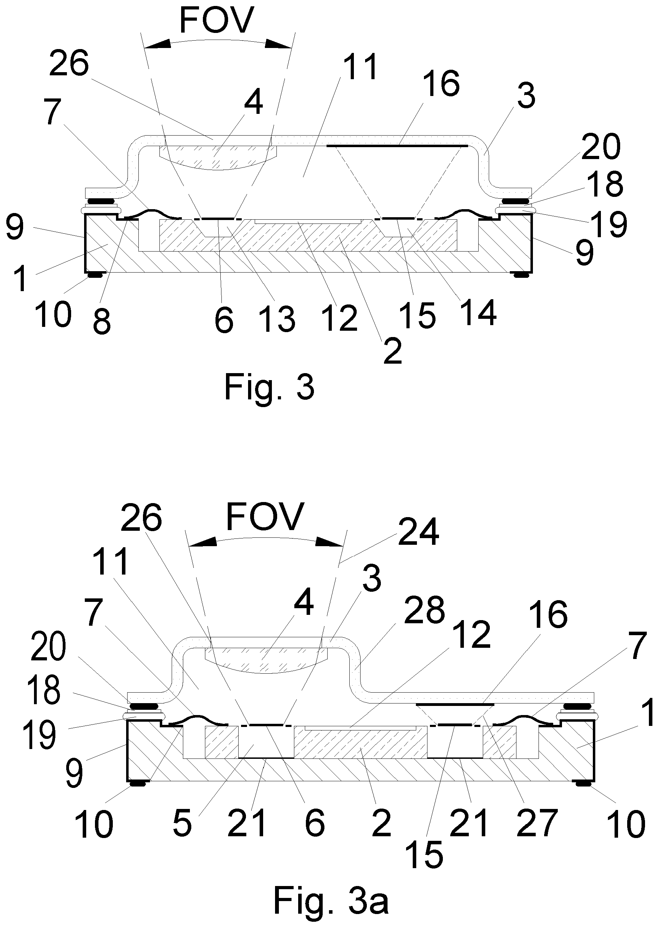

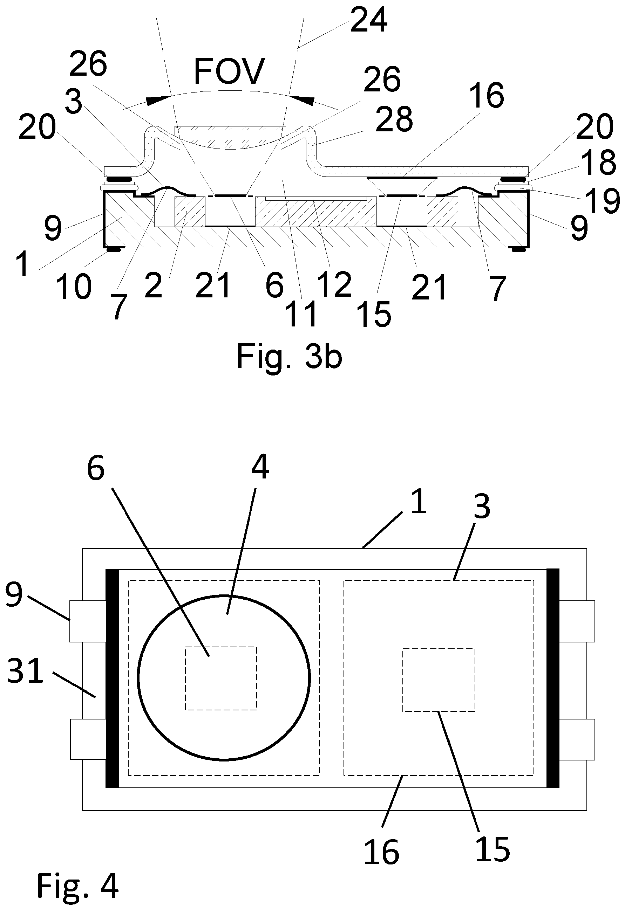

Im Gehäusedeckel 3 befindet sich weiterhin eine Apertur-Öffnung 26, vor der auf der Innenseite des Gehäusedeckels 3 eine fokussierende Linse 4 angeordnet ist (Fig. 1a). Alternativ kann die Linse 4 auch von außen auf dem Gehäusedeckel 3 montiert werden, wie das in Fig. 3b dargestellt ist. Funktionswesentlich ist, dass die Mittelachse der Aperturöffnung 26 bzw. der fokussierenden Linse 3 mit der Symmetrieachse der Membran 6 übereinstimmt.

Die Linse 4 fokussiert die Infrarotstrahlung von einem vor der Aperturöffnung 26 befindlichen Messobjekt aus einem Blickwinkel ("Field of View") FOV 24 auf den Sensorpixel mit der Absorberfläche auf der Membran 6 bzw. der dünnen Trägermembran 22 des Pixels.

Der Gehäusedeckel 3 ist ein metallisches Tiefziehteil, um eine gute thermische Leitfähigkeit zu gewährleisten, der auf eine Kontaktstelle 18 des Gehäusesubstrates 1 geklebt, gelötet oder geschweißt ist. Alternativ kann der Gehäusedeckel 3 auch ein metallisches oder nichtmetallisches Spritzguss- oder Druckgussteil sein, das bevorzugt eine gute Wärmeleitfähigkeit aufweist und an den Kontaktstellen zum Gehäusesubstrat 1 vorbereitete Beschichtungen für einen hermetischen Kleb-, Löt- oder Schweißverschluss zum Seitenrand 31 des Gehäusesubstrates 1 besitzt.

Im Falle einer Lötung oder Schweißung muss die schweiß- oder lötbare metallische Kontaktstelle 18 auf dem Gehäusesubstrat 1 über einer Isolationsschicht 19 auf der metallischen Verbindung 9 (Fig. 1a) aufgebracht sein, um einen Kurzschluss zwischen den Metallleitbahnen 9 auf der Seitenwand 31 des Gehäusesubstrates 1 zu verhindern. Mit Hilfe einer umlaufenden Lot- oder Klebefuge 20 wird der erforderliche hermetische Gehäuseverschluss gewährleistet.

Das Gehäusesubstrat 1, dass eine zentrale ebene Bodenplatte mit diese umgebenden Seitenwänden 31 umfasst, besteht vorwiegend aus einem nicht metallischen Werkstoff (z.B. Keramik), auf dem metallische Leitbahnen 9 aufgetragen sind. Diese Leitbahnen 9 enden auf der Oberseite mit inneren Kontaktpads 8 und auf der Unterseite mit äußeren Kontaktflächen 10 für eine Oberflächenmontage. Die Kontaktflächen 10 enthalten eine löt- oder schweißbare Beschichtung zur mechanischen und elektrischen Montage auf darunter liegenden nicht dargestellten Leiterplatten oder anderen Verdrahtungsträgern.

Das Gehäusesubstrat 1 kann auf der Oberseite unter dem Sensorpixel, d.h. in der Aussparung 30 mit einer reflektierenden Metallschicht 21 (z.B. Gold, Silber, Aluminium) versehen sein (Fig. 1a), um die Signalempfindlichkeit des Sensorpixels durch Reflexion durchgelassener Strahlungsanteile zu erhöhen.

Die Absorberfläche auf der Membran 6 bedeckt die sogenannten "heißen" Kontakte des Thermopilesensors, die auf der dünnen Membran 22, die z.B. aus Siliziumoxid oder Siliziumnitrid, oder aus anderen isolierenden Materialien besteht, angeordnet sind. Die Membran mit der Absorberschicht 6 ist über der Aussparung 5 im monolithischen Sensorchip 2 (Si-Substrat) aufgehängt. Bei der Lösung nach Fig. 1 hat die Aussparung 5 senkrechte oder nahezu senkrechte Wände und wird z.B. durch reaktives Ionenätzen (einem sogenannten RIE-Prozess) von der Waferrückseite her in das Sensorchip 2 eingetrieben. Alternativ kann die Aushöhlung unter dem Sensorpixel auch (wie in Fig. 3 dargestellt) von der Vorderseite in den Sensorchip 2 (Si-Wafer) hineingetrieben werden. Hierbei wird statt des reaktiven Ionenätzens ein an sich bekanntes nasschemisches Ätzverfahren eingesetzt, bei dem durch an sich bekannte Schlitze zwischen der Membran 6 und den Beams 23, bzw. den Beams 23 und der Seitenwand der Aussparung 5 eine Opferschicht (z.B. poröses Silizium) oder Teile des Siliziumsubstrates gelöst und geätzt werden. Ein Beispiel dafür sind die schrägen Wände 13, 14 der Aussparungen 5 in Fig. 3.

Die Thermoelemente der Thermopilestruktur werden aus an sich bekannten thermoelektrischen Materialien unterschiedlicher thermoelektrischer Polarität hergestellt. Dies können sowohl in einem CMOS Prozess aufgebrachte Halbleitermaterialien z.B. n- leitendes und p- leitendes Poly-Silizium, (dotiertes), amorphes Silizium, Germanium oder einer Mischform aus Silizium und Germanium, oder aufgebrachte dünne thermoelektrische Metallschichten (wie z.B. Wismut, Antimon o.ä.) sein und die eine Dicke von weniger als 1 µm aufweisen.

Während die "heißen" Kontakte der Thermoelemente auf der dünnen Membran 22 unterhalb der Absorberschicht liegen, sind die "kalten" Kontakte auf dem Rand des Siliziumsubstrates 2 angeordnet, so dass zwischen beiden Kontakten ein möglichst großer Temperaturunterschied erreicht wird. Besonders bevorzugt weisen die kleinen Pixel an sich bekannte, lange Beams 23 auf, die durch von der Vorderseite in die Membran geätzte Schlitze vom Si-Substrat des Sensorchips 2 und vom Absorberbereich isoliert sind. Da solche hochsensitiven Thermopile Pixel aus dem Stand der Technik hinreichend bekannt sind, sind weitere Details (wie die Ausführung der Beams und der isolierenden Schlitze) in den Zeichnungsfiguren nicht dargestellt.

Die im Sensorchip 2 integrierte Signalverarbeitungseinheit 12 enthält z.B. an sich bekannte Temperatur- und Spannungsreferenzen, Signalverstärker, ggf. Tiefpassfilter, Analog/Digital- Wandler, eine Mikroprozessoreinheit mit Datenspeicher (z.B. EEPROM) sowie eine Schnittstelle zur Kommunikation mit der externen Elektronik des Mobilgerätes (z.B. Smart Phone). Die auf dem Sensorchip 2 integrierte Temperaturreferenz (z.B. eine sogenannte PTAT- (Proportional To Ambient Temperature)) Schaltung misst die Temperatur des Sensorchips und damit der "kalten" Kontakte.

Die in der Signalverarbeitungseinheit 12 enthaltenen Vorverstärker verstärken die sehr geringen Signalspannungen des oder der Thermopilen Sensorpixel und vergleichen sie mit den Spannungs- und Umgebungstemperaturreferenzen. All diese Analogsignale werden im Analog/Digital-Wandler in Digitalwerte umgewandelt, die wiederum in der Mikroprozessoreinheit zusammen mit den im Datenspeicher (z.B. EEPROM) abgelegten Korrekturwerten zur Objekttemperaturberechnung genutzt werden.

Die im Gehäusedeckel 3 montierte Linsenoptik/fokussierende Linse 4 hat auf der Unterseite, der Oberseite oder auf beiden Seiten fokussierende Linsenflächen. Die Montage erfolgt üblicherweise derart, dass der Abstand zum Sensorpixel genau der Brennweite (bzw. der sogenannten "back focal length") der Linse 4 entspricht. Die Linse wird in einem an sich bekannten Massenverfahren hergestellt (z.B. Pressen, Moulding) oder besonders bevorzugt, in einem Waferlevel Verfahren, z.B. auf Silizium Wafern, bei dem viele tausend Linsen gleichzeitig auf einem Wafer hergestellt und mit Infrarot-Filterschichten versehen werden. Solche Waferlinsen haben den zusätzlichen Vorteil, dass sie sich bei der Montage der Linsen in den Gehäusedeckel 3 mit den gleichen automatisierten Handlingsystemen (sogenannte Pick & Place oder Die-Bonder) vom Si-Wafer "abpicken" und montieren lassen, wie normale Halbleiter Chips. Dabei können sowohl refraktive (mit üblicher sphärischer oder asphärischer Krümmung der aktiven Fläche) als auch diffraktive Linsen (z.B. Fresnellinsen) eingesetzt werden.

Die Montage der Linse 4 im Gehäusedeckel 3 kann z.B. durch Kleben, Löten oder Schweißen erfolgen, wobei der Rand der Linse für das Löten oder Schweißen eine Metallisierungsschicht erhält, die nicht dargestellt ist. Die Montage von Linse 4 und Gehäusesubstrat 1 zum Deckel 3 erfolgt meist durch Kleben, wenn das einzuschließende Gas oder Gasgemisch atmosphärischen Normaldruck aufweisen soll. Wenn der Druck des Gasmediums 11 im Gehäuse deutlich niedriger als Normaldruck sein soll, wird bevorzugt ein Löt- oder Schweißverfahren zur Montage eingesetzt.

Der Blickwinkel eines Sensorpixels soll für die Anwendung möglichst < 40 Grad, bevorzugt < 15 Grad betragen. Zur Abschätzung der Blickwinkels FOV 24 lässt sich am Einfachsten eine Formel verwenden, die die Pixelgröße zur Brennweite ins Verhältnis setzt. So liefert der ARCTAN des Verhältnisses von halber Pixelgröße zu Brennweite als Ergebnis den halben Blickwinkel (FOV/2). Daraus ergibt sich z.B., dass sich bei einer Brennweite der Linse von 1 mm und einer Pixelgröße von 0,5 mm ein Blickwinkel von 30 Grad ergibt. Eine Pixelgröße von 0,26 mm liefert einen Blickwinkel von etwa 12 Grad. Bei größerer Brennweite der Linse verringert sich zwar der Blickwinkel, aber bereits bei einer Linsenbrennweite von 1,5 mm und den typischen Dicken von Linse (z.B. 0,26 mm), Sensorchip (0,4 mm), Deckel und Bodenplatte (je 0,2 mm) ergeben sich je nach Konstruktion der Linse bereits Gehäusehöhen von 2,6...3 mm - zu viel für die meisten Smartphones.

Fig. 1b zeigt eine Modifikation des miniaturisierten SMD Sensors mit besonders niedriger Bauhöhe. Hierbei erhält der Gehäusedeckel 3 eine Aufwölbung 33 nach oben, die etwa der Linsenkrümmung entspricht. Die gekrümmte (konvexe) Seite der fokussierenden Linse 4 zeigt nach oben, so dass der Scheitelpunkt der Linse 4 etwa der maximalen Höhe des Deckels 3 entspricht und somit die gesamte Gehäusehöhe bestimmt. Auf diese Weise kann die Gesamthöhe des Gehäuses im Vergleich zur Anordnung nach Fig. 1a etwa um die Dicke des Deckels verringert werden.

Alternativ kann der Gehäusedeckel 3 auch eine zusätzliche Erhöhung 28 aufweisen, die in einen Einzug 34 zur Aufnahme der Linse 4 übergeht und deren Außenumfang umschließt. Die Linse 4 ist in diesem Fall mit der gewölbten Seite nach unten in den Einzug 34 eingesetzt (Fig. 3b). Die Aperturöffnung 26 bildet hier der innere Rand des Einzuges 34, der zugleich die fokussierende Linse 4 abstützt.

Das in dem Gehäuse eingeschlossene Medium 11 ist ein Gas oder Gasgemisch, dessen Wärmeleitfähigkeit wesentlich geringer ist als Luft oder Stickstoff bei Normaldruck. Vorzugsweise ist das Gasmedium 11 ein Gas mit hoher molarer Masse (z.B. Xenon, Krypton oder Argon) oder ein Gas mit einem gegenüber normalem Druck deutlich reduziertem Innendruck. Das Gehäuse muss so verschlossen sein, dass kein Gasaustausch mit der Umgebung erfolgt.

Fig. 2 zeigt eine Draufsicht auf einen oberflächenmontierbaren IR-Einelementsensor nach Fig. 1 mit weiteren Details.

Die Linse 4 befindet sich hier genau symmetrisch über dem Sensorpixel 6, wobei mehrere Anschlusskontakte 9 eine elektrische Verbindung vom Sensorchip 2 im Inneren des Gehäuses zu den Anschlusskontakten 10 für die SMD Montage auf der Gehäuseunterseite herstellen.

Eine weitere Ausgestaltung des erfindungsgemäßen miniaturisierbaren SMD Thermopile Sensors zeigt Fig. 3, bei der neben dem aktiven Sensorpixel 6 ein weiterer Pixel als Referenzpixel 15 vorgesehen ist, das am entfernten Ende des Sensorchips 2 angeordnet ist. Dieser Referenzpixel 15 empfängt keine Infrarotstrahlung vom Messobjekt selbst, sondern "sieht" auf eine emittierende Oberfläche 16, die an der Innenseite des Deckels aufgetragen oder montiert ist. Damit ist die Kompensation von Messfehlern durch Temperaturgradienten im Sensorgehäuse, hervorgerufen z.B. durch den sogenannten "Heat Shock" Effekt, möglich. Diese emittierende Schicht 16 wird bevorzugt durch Bedrucken oder Besprühen bzw. Bedampfen über Wechselmasken erzeugt. Alternativ kann ein zusätzliches Teil mit hoher Emission auf die Deckelinnenfläche geklebt oder anderweitig mit gutem Wärmekontakt zum Gehäusedeckel 3 montiert werden.

Bei der Ausführung in Fig. 3 sind die Thermopile Pixel in Oberflächen-Mikromechanik hergestellt, also durch Freiätzung der Aushöhlungen 5 unter den Membranen 6 und 15 von der Vorderseite durch Schlitze in den freitragenden Membranen. Beide Pixel 6, 15 können aber auch, wie die Sensorpixel gemäß Fig. 1 bzw. Fig. 3a eine Aushöhlung mit senkrechten Wänden 5 aufweisen, die von der Rückseite durch DRIE in das Sensorchip 2 getrieben worden sind.

Fig. 3a zeigt eine erfindungsgemäße Ausgestaltung des miniaturisierten SMD Sensors mit einem Referenzpixel 15. Bei dieser Anordnung weist der Gehäusedeckel für die Linse eine zusätzliche Erhöhung 28 auf, um den für eine scharfe Abbildung notwendigen Abstand (sogenannte "back focal length") zwischen der Linse 4 und dem Absorber 6 auf der Membran zu erreichen, während der Deckel 3 mit der absorbierenden Schicht 16 oberhalb des Referenzpixels besonders flach ausgeführt ist. Damit lässt sich auf effektive Weise erreichen, dass das Referenzpixel mit dem Absorber 15 näher an das Sensorpixel mit dem Absorber 6 heranrücken kann und trotzdem keine Strahlung vom Objekt über die Linse erhält. Die spezielle Erhöhung 28 kann auch formschlüssig so ausgestaltet sein, dass die Linse 4 bei der Montage genau symmetrisch über dem Absorber 6 des Sensorpixels montiert wird, um optische Abbildungsfehler, wie ein "Schielen", zu vermeiden, wenn die optische Achse der Linse genau senkrecht über dem Absorbermittelpunkt liegt.

Fig. 4 zeigt die Draufsicht auf eine erfindungsgemäße Ausgestaltung des miniaturisierten SMD Sensors nach Fig. 3 und 3a. Daraus ist zu erkennen, dass das aktive Sensorpixel 6 durch die Linsenoptik 4 der Aperturöffnung nach außen sieht, während das Referenzpixel 15 dagegen die hinter dem Deckel liegende absorbierende Schicht 16 sieht und dabei die Gehäusetemperatur misst. Prinzipiell lassen sich je nach Platzanforderung im Endgerät auch quadratische oder annähernd quadratische Gehäuseformen erreichen. Mit der Ausgestaltung in Fig. 3a gelingt es leichter, das gesamte Gehäuse annähernd quadratisch auszubauen, weil sich der Abstand zwischen den Absorbern 6 und 16 deutlich verringern kann.

Mit dem zusätzlichen Referenzpixel 15 stehen für Kompensationszwecke von langsamen und schnellen Umgebungstemperaturänderungen sowohl die Chiptemperatur und damit die Temperatur der "kalten" Thermopilekontakte mittels integrierter PTAT-Referenz, als auch die Gehäusetemperatur des Deckels 3 mit der Absorberschicht 16 zur Verfügung. Dies erlaubt eine wirksame Kompensation der in mobilen Geräten (z.B. Smartphones) auftretenden kurzzeitigen Temperaturänderungen, z.B. nach dem Einschalten, beim "aus der Hosentasche Herausnehmen", beim ans Gesicht oder Ohr halten oder beim Wechsel aus dem temperierten Innenraum nach außen, wo plötzlich deutlich höhere oder niedrigere Temperaturänderungen auftreten können.

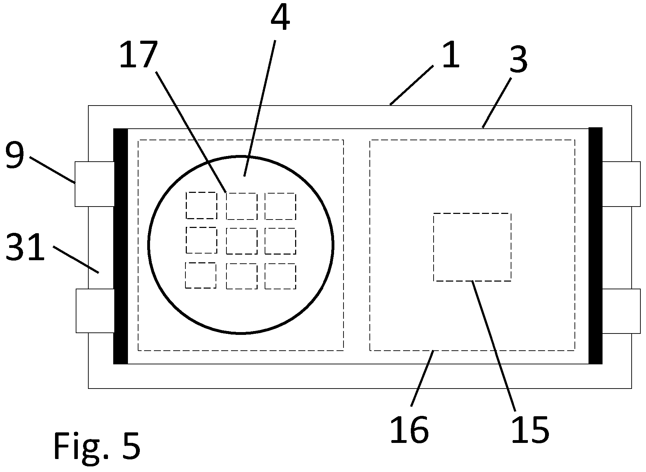

Eine für Mobilgeräte sehr interessante Erweiterung der Erfindung stellt die Ausgestaltung des aktiven Pixels als Mehrfachpixel dar. Eine entsprechende Lösung ist aus Fig. 5 ersichtlich. Hierbei sind statt eines Einzelpixels mehrere Pixel 17 (z.B. 2x2, 4x4, 8x8, 16x16) unter der Linse angeordnet, um eine räumliche Verteilung der Temperaturverteilung des Objektes oder auch die leichte Erkennung von Gesten zu erfassen. Wiederum können die Aushöhlungen unter den Pixeln mit den geschlitzten Membranen von der Oberseite oder der Unterseite her in den Sensorchip 2 eingetrieben werden.

Der erfindungsgemäße Sensorchip 2 nach Fig. 5 enthält mehrere Einzelzellen 17 mit geschlitzter Membran und an sich bekannter Beamstruktur, auf der die Thermoelemente (nicht im Detail dargestellt) untergebracht sind.

Die Signalverarbeitung der einzelnen Pixel erfolgt in der Signalverarbeitungseinheit 12, an deren Ausgang (Interface) digitale Signalinformationen der einzelnen Pixel zusammen mit den Korrekturwerten zur Messung der Temperaturverteilung oder z.B. einer Gestensteuerung ausgegeben werden. Die Linsenoptik ist so ausgebildet, dass die entfernten Messobjekte auf den Sensorpixeln scharf abgebildet werden.

### Bezugszeichenliste

- 1: Gehäusesubstrat (Bodenplatte)
- 2: Monolithisches Sensorchip
- 3: Gehäusedeckel
- 4: Fokussierende Linse
- 5: Aushöhlung unter Pixel
- 6: Membran mit Absorberschicht
- 7: Bonddraht
- 8: Kontaktfläche (Metallisierung) auf Gehäusesubstrat
- 9: Metallische Verbindung
- 10: Kontaktfläche auf Gehäuserückseite
- 11: Gasmedium im hermetisch verschlossenen Gehäuse
- 12: Signalverarbeitungseinheit
- 13: Aushöhlung unter aktivem Pixel
- 14: Aushöhlung unter Referenzpixel
- 15: Membran mit Absorberschicht des Referenzpixels
- 16: Absorbierende Schicht
- 17: Sensorpixel in Matrixform
- 18: Metallisierte, lötbare Verbindungsfläche auf Gehäusesubstrat
- 19: Isolationsschicht
- 20: Lot- oder Klebefuge
- 21: Reflektierende Metallschicht
- 22: dünne Trägermembran des Pixels
- 23: Beam
- 24: Äußerer Strahlengang
- 25: Anschlusskontakt
- 26: Apertur-Öffnung
- 27: Blickwinkel des Referenzpixels
- 28: Erhöhung des Gehäusedeckels über Sensorpixel
- 29: Thermopilepixel
- 30: Aussparung
- 31: Seitenwand
- 32: Seitenwand
- 33: Aufwölbung
- 34: Einzug

## Patentansprüche

1. SMD-fähiger Thermopile Infrarot Sensor zur berührungslosen Temperaturmessung, als Hot-Spot oder zur Gestendetektion, mit mindestens einem miniaturisierten Thermopilepixel (29) auf einem monolithisch integrierten Sensorchip (2), der in einem hermetisch verschlossenen Gehäuse bestehend aus einem zumindest teilweise nichtmetallischen Gehäusesubstrat (1) und einem Gehäusedeckel (3) angeordnet ist,
wobei sich im Gehäuse ein Gas- oder Gasgemisch befindet, und wobei im Gehäusedeckel (3) gegenüber dem mindestens einen Thermopilepixel (29) eine Aperturöffnung (26) eingebracht ist, die mit einer fokussierenden Linse (4) verschlossen ist, welche die Strahlung von Objekten auf den mindestens einen Thermopilepixel (29) auf dem Gehäusesubstrat (1) fokussiert,
wobei das Gehäusesubstrat (1) aus einem keramischen Material besteht, und mit einer Aussparung (30) mit einer zentralen ebenen Bodenplatte sowie Seitenwänden (31) zur Aufnahme des Sensorchips (2) versehen ist,
wobei der Abstand der fokussierenden Linse/Linsenoptik (4) zum mindestens einen Thermopilepixel (29) deren Brennweite entspricht,
wobei der Gehäusedeckel (3) für die fokussierende Linse (4) eine zusätzliche formschlüssige Erhöhung (28) zur symmetrischen Montage der fokussierenden Linse (4) über dem mindestens einen Thermopilepixel (29) aufweist, um den für eine scharfe Abbildung notwendigen Abstand zwischen der fokussierenden Linse (4) und dem Absorber (6) auf der Membran zu erreichen,
wobei neben dem mindestens einen Thermopilepixel (29) ein Referenzpixel (15) angeordnet ist, das auf eine absorbierende Schicht (16) auf der Innenseite des Deckels (3) gerichtet ist und im Wärmekontakt zum Gehäusedeckel (3) steht, und
wobei der Abstand zwischen dem Gehäusedeckel (3) und dem Referenzpixel (15) geringer ist, als der Abstand zwischen der Linse (4) und dem mindestens einen Thermopilepixel (29), um optische Abbildungsfehler zu vermeiden.

2. SMD-fähiger Thermopile Infrarot Sensor nach Anspruch 1, **dadurch gekennzeichnet, dass** der Gehäusedeckel (3) ein wärmeleitfähiges metallisches Tiefziehteil oder ein metallisches oder nichtmetallisches Spritzguss- oder Druckgussteil ist.

3. SMD-fähiger Thermopile-Infrarot Sensor nach Anspruch 1, **dadurch gekennzeichnet, dass** die fokussierende Linse (4) diffraktiv oder refraktiv ist und sowohl asphärische oder sphärische Flächen aufweist.

4. SMD-fähiger Thermopile-Infrarot Sensor nach Anspruch 1, **dadurch gekennzeichnet, dass** die fokussierende Linse (4) eine Brennweite zwischen 0,5 mm und 1,9 mm aufweist.

5. SMD-fähiger Thermopile-Infrarot Sensor nach Anspruch 1, **dadurch gekennzeichnet, dass** sich unter dem mindestens einen Sensorpixel (2) eine reflektierende Metallschicht (21) befindet.

## Claims

1. SMD-enabled infrared thermopile sensor for contactless temperature measurement, as a hot spot or for gesture detection, with at least one miniaturized thermopile pixel (29) on a monolithically integrated sensor chip (2), which is arranged in a hermetically sealed housing consisting of an at least partially non-metallic housing substrate (1) and a housing cover (3),
wherein a gas or gas mixture is contained in the housing, and wherein an aperture opening (26) is introduced in the housing cover (3) opposite the at least one thermopile pixel (29), which is closed with a focusing lens (4) which focuses the radiation from objects onto the at least one thermopile pixel (29) on the housing substrate (1),
wherein the housing substrate (1) consists of a ceramic material, and is provided with a recess (30) with a central flat base plate and side walls (31) for receiving the sensor chip (2),
wherein the distance between the focusing lens/lens optics (4) and the at least one thermopile pixel (29) corresponds to its focal length,
wherein the housing cover (3) has an additional form-fitting elevation (28) for the focusing lens (4) for symmetrical mounting of the focusing lens (4) above the at least one thermopile pixel (29) in order to achieve the distance between the focusing lens (4) and the absorber (6) on the membrane that is necessary for a sharp image,
wherein a reference pixel (15) is arranged next to the at least one thermopile pixel (29), which is directed toward an absorbing layer (16) on the inside of the cover (3) and is in thermal contact with the housing cover (3), and
wherein the distance between the housing cover (3) and the reference pixel (15) is less than the distance between the lens (4) and the at least one thermopile pixel (29) in order to avoid optical imaging errors.

2. SMD-enabled infrared thermopile sensor according to claim 1, **characterized in that** the housing cover (3) is a heat-conductive metal deep-drawn part or a metal or non-metal injection-molded or die-cast part.

3. SMD-enabled infrared thermopile sensor according to claim 1, **characterized in that** the focusing lens (4) is diffractive or refractive and has both aspherical and spherical surfaces.

4. SMD-enabled infrared thermopile sensor according to claim 1, **characterized in that** the focusing lens (4) has a focal length between 0.5 mm and 1.9 mm.

5. SMD-enabled infrared thermopile sensor according to claim 1, **characterized in that** a reflective metal layer (21) is located under the at least one sensor pixel (2).

## Revendications

1. Capteur infrarouge à thermopile CMS pour la mesure de température sans contact, comme point chaud ou pour la détection de gestes, avec au moins un pixel thermopile miniaturisé (29) sur une puce de capteur intégrée de manière monolithique (2), qui est disposée dans un boîtier hermétiquement fermé composé d'un substrat de boîtier (1) au moins partiellement non métallique et d'un couvercle de boîtier (3),
dans lequel un gaz ou un mélange de gaz est contenu dans le boîtier, et dans lequel une ouverture (26) est introduite dans le couvercle du boîtier (3) en face d'au moins un pixel thermopile (29), laquelle est fermée par une lentille de focalisation (4) qui focalise le rayonnement provenant d'objets sur l'au moins un pixel thermopile (29) sur le substrat du boîtier (1),
dans lequel le substrat de boîtier (1) est constitué d'un matériau céramique et est pourvu d'un évidement (30) avec une plaque de base plate centrale et des parois latérales (31) pour recevoir la puce de capteur (2),
dans lequel la distance entre la lentille de focalisation/l'optique de lentille (4) et l'au moins un pixel thermopile (29) correspond à sa distance focale,
dans lequel le couvercle de boîtier (3) présente un rehaussement supplémentaire (28) adapté à la forme de la lentille de focalisation (4) pour le montage symétrique de la lentille de focalisation (4) au-dessus du au moins un pixel thermopile (29) afin d'obtenir la distance entre la lentille de focalisation (4) et l'absorbeur (6) sur la membrane qui est nécessaire pour obtenir une image nette,
dans lequel un pixel de référence (15) est disposé à côté de l'au moins un pixel thermopile (29), qui est dirigé vers une couche absorbante (16) à l'intérieur du couvercle (3) et est en contact thermique avec le couvercle du boîtier (3), et
dans lequel la distance entre le couvercle du boîtier (3) et le pixel de référence (15) est inférieure à la distance entre la lentille (4) et l'au moins un pixel thermopile (29) afin d'éviter des erreurs d'imagerie optique.

2. Capteur infrarouge à thermopile CMS selon la revendication 1, **caractérisé en ce que** le couvercle du boîtier (3) est une pièce emboutie métallique thermoconductrice ou une pièce moulée par injection ou moulée sous pression en métal ou en matériau non métallique.

3. Capteur infrarouge à thermopile CMS selon la revendication 1, **caractérisé en ce que** la lentille de focalisation (4) est diffractive ou réfractive et présente à la fois des surfaces asphériques et sphériques.

4. Capteur infrarouge à thermopile CMS selon la revendication 1, **caractérisé en ce que** la lentille de focalisation (4) a une distance focale comprise entre 0,5 mm et 1,9 mm.

5. Capteur infrarouge à thermopile CMS selon la revendication 1, **caractérisé en ce qu'**une couche métallique réfléchissante (21) est située sous l'au moins un pixel de capteur (2).
